# EUROPÄISCHE PATENTSCHRIFT

(11) **EP 1 139 082 B1**
(45) Veröffentlichungstag und Bekanntmachung des Hinweises auf die Patenterteilung: **09.05.2007**
(21) Anmeldenummer: 01106895.4
(22) Anmeldetag: 20.03.2001
(51) Int. Cl.: G01K 5/12

(54) **Thermometerflüssigkeit**
Expansion liquid for thermometer
Liquide d'expansion pour thermomètre

(30) Priorität: 28.03.2000 DE 10015081
(43) Veröffentlichungstag der Anmeldung: 04.10.2001
(73) Patentinhaber: Diehm, Roland, 97877 Wertheim-Dertingen (DE)
(72) Erfinder: Diehm, Roland, 97877 Wertheim-Dertingen (DE)
(74) Vertreter: Küchler, Stefan

(56) Entgegenhaltungen:
- DE-C- 920 516
- DE-U- 9 006 498
- WEEN S: "Liquid-in-glass thermometers still alive and indicating" ADVANCES IN INTRUMENTATION AND CONTROL. VOL.46. PROCEEDINGS OF THE ISA/91 INTERNATIONAL CONFERENCE AND EXHIBITION, ANAHEIM, CA, USA, 27-31 OCT. 1991, Seiten 113-120 vol.1, XP001014205 1991, Research Triangle Park, NC, USA, ISA, USA
- PATENT ABSTRACTS OF JAPAN vol. 012, no. 237 (C-509), 6. Juli 1988 (1988-07-06) -& JP 63 027466 A (NIPPON SHOKUBAI KAGAKU KOGYO CO LTD), 5. Februar 1988 (1988-02-05)
- DATABASE WPI Section EI, Week 198640 Derwent Publications Ltd., London, GB; Class S03, AN 1986-264148 XP002169364 -& SU 1 218 300 A (GOLOVENCHI E.A.), 15. März 1986 (1986-03-15)
- HEUSE W: "FLUESSIGKEITSTHERMOMETER" ATM MESSTECHNISCHE + PRAXIS, R.OLDENBOURG. MUNCHEN, DE, Bd. J212, Nr. 2, Januar 1950 (1950-01), Seiten T07-T10, XP001019789
- DATABASE INSPEC [Online] INSTITUTE OF ELECTRICAL ENGINEERS, STEVENAGE, GB; THOMPSON R D: "Liquid-in-glass thermometers: Principles and practices" Database accession no. 18835 XP001001952 & ISA TRANSACTIONS, 1968, USA, Bd. 7, Nr. 2, Seiten 87-92, ISSN: 0019-0578

## Beschreibung

Die Erfindung richtet sich auf die Verwendung einer Thermometerflüssigkeit, als Füllflüssigkeit für ein Kapillarenthermometer.

Das zum Füllen von Glaskapillarenthermometern im Mittelalter weit verbreitete Quecksilber hat sich als gesundheitsschädlich erwiesen und wird deshalb heutzutage nicht mehr häufig verwendet.

In der DE-OS 42 27 434 wird bspw. vorgeschlagen, hierfür eine Galliumlegierung mit den weiteren Bestandteilen Indium und Zinn zu verwenden. Hiermit lassen sich jedoch nur Temperaturen bis -5° C messen, da sich die betreffende Legierung unterhalb dieser Temperatur verfestigt. Darüber hinaus ist insbesondere Indium ein sehr seltenes Metall und daher in der Gewinnung vergleichsweise teuer.

Ferner wird Petroleum als Thermometerflüssigkeit verwendet. Petroleum muss jedoch aus Erdöl gewonnen werden, welches durch starken Raubbau in den vergangenen Jahrzehnten in nächster Zeit zu einem immer selteneren Rohstoff werden wird, und außerdem liegt hier der Flammpunkt bereits bei 58° C, so dass bei dem Zuschmelzen der gefüllten Glaskapillare erhöhte Sorgfalt geboten ist, um eine Entzündung des Petroleums zu vermeiden.

Aus den Nachteilen des beschriebenen Stands der Technik resultiert das Problem, eine Füllflüssigkeit für ein Glaskapillarenthermometer und ein Herstellungsverfahren dafür zu finden, derart, dass die dazu erforderlichen Rohstoffe in großen Mengen verfügbar sind, wobei ferner das Verarbeitungs- bzw. Herstellungsverfahren möglichst einfach sein sollte und wobei ferner der Gefrierpunkt möglichst niedrig und Flamm- und Siedepunkt möglichst hoch sein sollten.

Die Lösung dieses Problems gelingt mit einer Thermometerflüssigkeit auf der Basis gesättigter oder ungesättigter, vorzugsweise aliphatischer Carbonsäuren, insbesondere Monocarbonsäuren. Derartige Säuren sind Bestandteil nahezu jeder lebenden Zelle und können daher in nahezu unbegrenztem Umfang aus nachwachsenden Rohstoffen gewonnen werden.

Weitere Vorteile der Erfindung ergeben sich dadurch, dass die Carbonsäure pflanzlichen Ursprungs ist. Für den erfindungsgemäßen Anwendungszweck eignen sich pflanzliche Fettsäuren ebenso wie tierische Fettsäuren, erstere lassen sich jedoch mit einem weitaus niedrigeren Aufwand durch Pressen ausschließlich zu diesem Zweck angebauter Pflanzen erzeugen.

Weitere Vorteile lassen sich erzielen, wenn die Carbonsäure aus Rapsöl gewonnen wird. Obzwar auch Erdnuß-, Lein-, Soja-, Sonnenblumen- oder Sesamöl verwendet werden kann, so ist Rapsöl hinsichtlich seiner Qualität für die Synthese der erfindungsgemäßen Thermometerflüssigkeit völlig ausreichend. Ferner spielt es nur eine untergeordnete Rolle, ob das Öl überwiegend gesättigte oder ungesättigte Fettsäuren enthält.

Es hat sich als günstig erwiesen, als Thermometerflüssigkeit einen flüssigen Ester einer vorzugsweise aliphatischen Carbonsäure zu verwenden. Da insbesondere ungesättigte Fettsäuren, besonders Ölsäure, durch Oxidation und Aufspaltung in Aldehyde, bspw. Nonylaldehyd und Azelainaldehyd, zerlegt werden, welche einen stechenden oder ranzigen Geruch hervorrufen, sind reine Fettsäuren insbesondere in Verbindung mit der Luft in einem nicht evakuierten Glaskapillarengefäß chemisch nicht vollständig stabil. Durch die teilweise Verflüchtigung einzelner Bestandteile der Thermometerflüssigkeit könnte jedoch deren Anzeigegenauigkeit verfälscht werden. Durch eine Veresterung der Fettsäuren wird einer Oxidation vorgebeugt und damit deren chemische Stabilität erhöht.

Es liegt im Rahmen der Erfindung, bei der Veresterung der gesättigten oder ungesättigten Fettsäuren einen einwertigen Alkohol zu verwenden. Ester alipathischer Monocarbonsäuren mit einwertigen Alkoholen sind im allgemeinen leicht beweglicher als Glykol- oder Glycerinester. Bei letzteren ist daher das Befüllen der Glaskapillare wie auch das Zusammenziehen der Flüssigkeitssäule in einem Kapillarthermometer bei sinkender Temperatur erschwert, während die Flüssigkeitsspiegel lastenden Druck des in der Glaskapillare eingeschlossenen Gases unschwer ihr Volumen verringern können.

In Weiterbildung dieses Erfindungsgedankens ist vorgesehen, als Alkohol zur Veresterung Methanol zu verwenden. Methanol kann großtechnisch aus Kohlenmonoxid und Wasserstoff, dem sog. Synthesegas, gewonnen werden, während für die Synthese höherer einwertiger Alkohole von den entsprechenden Alkanen oder daraus gebildeten Substanzen auszugehen ist, welche zunächst in oftmals aufwendigen Verfahren destilliert werden müssen.

Der erfindungsgemäßen Thermometerflüssigkeit können Additive, bspw. als Gefrierschutz wie Ethylenglykol, zur Verbesserung der Alterungsbeständigkeit, der Viskosität und/oder Benetzungseigenschaften und/oder Farbstoffe beigemischt sein. Während die grundlegende Eigenschaft einer Thermometerflüssigkeit, nämlich ein möglichst großer Temperaturausdehnungskoeffizient, bei dem erfindungsgemäßen Ester ohnehin gegeben ist, können sekundäre Eigenschaften je nach Zusammensetzung noch verbesserungsbedürftig sein. Hierbei ist oftmals eine Absenkung des Gefrierpunktes wichtig, damit ein mit der erfindungsgemäßen Flüssigkeit ausgerüstetes Thermometer für sämtliche in unseren Breitengraden auftretende Temperaturen geeignet ist. Zu diesem Zweck eignet sich insbesondere Äthylenglykol. Ferner können Konservierungsstoffe zur Verbesserung der Alterungsbeständigkeit beigefügt werden, wie auch weitere Substanzen, um ein geeignetes Benetzungsverhalten im Zusammenwirken mit dem Material der Glaskapillare einzustellen. Letzteres ist wichtig, damit der aktuelle Flüssigkeitspegel stets exakt ablesbar ist. Diesem Zweck dient auch die Beimengung von Farbstoffen. Hierbei hat sich granulatförmiger Farbstoff bewährt, da dieser die chemischen und physikalischen Eigenschaften der Thermometerflüssigkeit kaum beeinflußt.

Die Erfindung bevorzugt eine Beimengung der Additive in einem Anteil von 0,01 - 5 Gew.-%, vorzugsweise etwa 2,5 Gew.-%. Durch Verwendung jeweils hoch effektiver Substanzen kann der Anteil der Additive so klein als möglich gehalten werden, so dass die erfindungsgemäße Thermometerflüssigkeit in der Herstellung möglichst preisgünstig ist.

Um einer Zerstörung eines mit der erfindungsgemäßen Thermometerflüssigkeit gefüllten Glaskapillarenthermometers vorzubeugen, sollte der Siedepunkt der Flüssigkeit oberhalb von 150° C liegen, vorzugsweise sogar oberhalb von 250° C. Somit ist die Gefahr eines Verdampfens der eingeschlossenen Thermometerflüssigkeit unter normal Bedingungen äußerst gering, so dass der Druck innerhalb der Glaskapillare nicht auf unzulässige Werte ansteigen kann und dieselbe vor einem Glasbruch ohne Einwirkung äußerer Kräfte weitgehend geschützt ist.

Ein weiterer Gesichtspunkt bei der Rezeptur der erfindungsgemäßen Thermometerflüssigkeit ist, dass der Flammpunkt oberhalb von 100° C liegen sollte, vorzugsweise oberhalb von 150° C. Ein möglichst hoher Flammpunkt ist insbesondere hinsichtlich der Herstellung eines Thermometers von Bedeutung, da hierbei die mit der Thermometerflüssigkeit gefüllte Glaskapillare durch Anschmelzen des Glases am oberen Ende verschlossen wird. Da der Erweichungspunkt von Glas oberhalb von 450° C liegt, könnte hierbei eine leicht entzündbare Thermometerflüssigkeit verarbeitungstechnische Probleme mit sich bringen. Ein hoher Flammpunkt bildet daher eine Sicherheitsreserve.

Besondere Vorteile lassen sich erzielen, wenn als Thermometerflüssigkeit Biodiesel verwendet wird. In Biodiesel sind neben dem Hauptbestandteil Fettsäure-Methylester zumeist eine Reihe von Additiven enthalten, um bspw. den Gefrierpunkt auf unter -20° C abzusenken, und dessen Haltbarkeit sicherzustellen, so dass diese Substanz auch bei den für eine Thermometerflüssigkeiten geltenden Randbedingungen einsetzbar ist.

Ein erster Schritt zur Herstellung einer erfindungsgemäßen Thermometerflüssigkeit besteht darin, geeignete Kulturpflanzen anzubauen, insbesondere Raps, deren Inhaltsstoffe ggf. durch Veredelung die gewünschten Eigenschaften annehmen. Nach der Ernte dieser Pflanzen werden diese ausgepreßt, um deren Öl zu erhalten. Da in dem Pflanzenöl die Fettsäuren zumeist in Form von Glyzeriden vorliegen und dadurch eine relativ dickflüssige Konsistenz aufweisen, muss in einem weiteren Verfahrensschritt das Glyzerin durch Methanol ersetzt werden. Schließlich können dem Ester noch zusätzliche Additive hinzugefügt werden, bspw. um den Gefrierpunkt zu senken, und die Alterungsbeständigkeit, Viskosität und/oder Benetzungseigenschaften zu verbessern, etc. Je nach Art des Esters bzw. dessen Hauptkomponente können hierbei unterschiedliche Eigenschaften für die Verwendung als Thermometerflüssigkeit verbesserungsbedürftig sein, so dass Art und Anteil der beizufügenden Additive von der Art der zur Erzeugung des pflanzlichen Öls verwendeten Pflanzensorte abhängt. Da viele Ester aliphatischer Monocarbonsäuren farblos sind, ist meistens auch die Zumischung eines Farbstoffs erforderlich. Um hierbei die sonstigen Eigenschaften der Flüssigkeit möglichst wenig zu beeinflussen, insbesondere den Temperaturausdehnungskoeffizienten, sieht die Erfindung vor, dass zu diesem Zweck ein feines Granulat verwendet wird, bspw. aus Kolloidteilchen, welches zusammen mit der erfindungsgemäßen Thermometerflüssigkeit eine Suspension ausbildet. Andererseits können auch lösliche Granulatpartikel verwendet werden.

Obzwar das bevorzugte Einsatzgebiet der erfindungsgemäßen Thermometerflüssigkeit bei der Füllung von Kapillarenthermometern zu suchen ist, sind darüber hinaus auch weitere Anwendung denkbar, bspw. bei Galilei-Thermometern.

Als Werkstoff für die Kapillare des Thermometers eignet sich bevorzugt Glas oder Acrylglas, da diese Werkstoffe optische Transparenz mit chemischer Stabilität verbinden und vergleichsweise preiswert sind.

Schließlich entspricht es der Lehre der Erfindung, dass die Glaskapillare in einem technischen Thermometer, einem Zimmer- oder Badethermometer, einem Weinthermometer od. dgl. eingebaut ist oder wird. All diese Anwendungsfälle, bei denen sich die erreichbaren Temperaturen etwa in einem Bereich von -20° C bis +100° C bewegen, können von der erfindungsgemäßen Thermometerflüssigkeit problemlos gemessen und angezeigt werden.

Weitere Merkmale, Eigenschaften, Vorteile und Wirkungen auf der Basis der Erfindung ergeben sich aus der nachfolgenden Beschreibung einiger bevorzugter Ausführungsbeispiele der Erfindung.

Bei einer ersten Ausführungsform der Erfindung besteht die Thermometerflüssigkeit aus Rapsölfettsäure-Methylester mit einem Farbstoffzusatz. Während der Rapsölfettsäure-Methylester eine hellgelbe Farbe hat, kann durch den Farbstoff bspw. eine tiefblaue oder bspw. rote Färbung erzielt werden, so dass ein guter Kontrast bspw. mit einem weißen Hintergrund gegeben ist.

Rapsölfettsäure-Methylester hat einen Gefrierpunkt von -10° C, einen Siedepunkt von etwa 300° C und einen Flammpunkt von 180° C. Die Dichte bei 20° C liegt zwischen 0,875 und 0,885 kg/l. Die kinematische Viskosität liegt bei einer Temperatur von 40° C bei 4,0 mm²/s (gemessen nach DIN 51562), während die betreffende Viskosität bei 100° C nur 1,7 mm²/s beträgt. Rapsölfettsäure-Methylester hat einen typischen, aber schwachen Geruch.

Da Rapsölfettsäure-Methylester biologisch abbaubar ist, sollten Konservierungsstoffe beigefügt sein, um die Haltbarkeit zu erhöhen. Ferner sollte während der Verarbeitung auf starke Oxidationsmittel verzichtet werden.

Da Rapsölfettsäure-Methylester als gefahrlose Substanz eingestuft wird, ist die Verwendung kleinerer Mengen in Glaskapillaren unkritisch.

Bei einer zweiten Ausführungsform der Erfindung besteht die Thermometerflüssigkeit aus Biodiesel, ggf. mit einem Zusatz aus einem oder mehreren Farbstoffen.

Der Hauptbestandteil des Biodiesels ist Rapsölfettsäure-Methylester, dessen Anteil bei etwa 97 bis 99 Gew.-% liegt.

Aus diesem Grunde sind die meisten Eigenschaften des Biodiesels identisch mit denen des in dem vorangehenden Beispiel beschriebenen Rapsölfettsäure-Methylester. Ein erster Unterschied liegt darin, dass der Gefrierpunkt des Biodiesels infolge der Zusetzung von Frostschutzmitteln auf etwa -20° C abgesenkt ist, ferner kann die Färbung von Biodiesel bereits von sich aus intensiver sein und von hellgelb bis bräunlich reichen. Wird eine andere Färbung gewünscht, können entsprechende Farbstoffe zugefügt werden.

Es hat sich gezeigt, dass Biodiesel auch hinsichtlich seiner Viskositäts- und Benetzungseigenschaften den Anforderungen für in Kapillarenthermometern einzufüllenden Flüssigkeiten genügt.

## Patentansprüche

1. Verwendung einer Thermometerflüssigkeit auf der Basis gesättigter oder ungesättigter, vorzugsweise aliphatischer Carbonsäuren, insbesondere Monocarbonsäuren, als Füllflüssigkeit für ein Kapillarenthermometer.

2. Verwendung einer Thermometerflüssigkeit nach Anspruch 1 als Füllflüssigkeit für ein Kapillarenthermometer, **dadurch gekennzeichnet, dass** die Carbonsäure pflanzlichen Ursprungs ist.

3. Verwendung einer Thermometerflüssigkeit nach Anspruch 2 als Füllflüssigkeit für ein Kapillarenthermometer, **dadurch gekennzeichnet, dass** die Carbonsäure aus Rapsöl gewonnen ist.

4. Verwendung einer Thermometerflüssigkeit nach einem der vorhergehenden Ansprüche als Füllflüssigkeit für ein Kapülarenthermometer, **dadurch gekennzeichnet, dass** die Thermometerflüssigkeit aus einem flüssigen Ester einer vorzugsweise aliphatischen Carbonsäurebesteht.

5. Verwendung einer Thermometerflüssigkeit nach Anspruch 4 als Füllflüssigkeit für ein Kapülarenthermometer, **dadurch gekennzeichnet, dass** die Thermometerflüssigkeit aus einem Ester mit einem einwertigen Alkohol, insbesondere Methanol, besteht.

6. Verwendung einer Thermometerflüssigkeit nach Anspruch 2 oder 3 in Verbindung mit Anspruch 5 als Füllflüssigkeit für ein Kapillarenthermometer, **dadurch gekennzeichnet, dass** sie aus Fettsäure-Methylester (Biodiesel) besteht.

7. Verwendung einer Thermometerflüssigkeit nach einem der vorhergehenden Ansprüche als Füllflüssigkeit für ein Kapillarenthermometer, **gekennzeichnet durch** die Beimischung von Additiven, bspw. als Gefrierschutz wie Äthylenglykol, zur Verbesserung der Alterungsbeständigkeit, der Viskosität, der Benetzungseigenschaften und/oder der Farbe.

8. Verwendung einer Thermometerflüssigkeit nach Anspruch 7 als Füllflüssigkeit für ein Kapillarenthermometer, **dadurch gekennzeichnet, dass** die Additive in einem Anteil von 0,01 - 5 Gew.-%, vorzugsweise etwa 2,5 Gew.-%, beigemischt sind.

9. Verwendung einer Thermometerflüssigkeit nach einem der vorhergehenden Ansprüche als Füllflüssigkeit für ein Kapillarenthermometer, **dadurch gekennzeichnet, dass** diese dadurch hergestellt ist, dass in einem ersten Verfahrensschritt Pflanzen ausgepreßt werden, insbesondere Raps, um ein pflanzliches Öl zu erhalten, insbesondere Rapsöl.

10. Verwendung einer Thermometerflüssigkeit nach Anspruch 9 als Füllflüssigkeit für ein Kapillarenthermometer, **dadurch gekennzeichnet, dass** diese dadurch hergestellt ist, dass das pflanzliche Öl verestert wird, und/oder zu einem Ester mit einem einwertigen Alkohol umgesetzt wird, insbesondere mit Methanol.

## Claims

1. Use of a thermometer liquid based on saturated or unsaturated, preferably aliphatic carboxylic acids, in particular monocarboxylic acids, as a filling liquid for a capillary thermometer.

2. Use of a thermometer liquid according to Claim 1 as a filling liquid for a capillary thermometer, **characterised in that** the carboxylic acid is of vegetable origin.

3. Use of a thermometer liquid according to Claim 2 as a filling liquid for a capillary thermometer, **characterised in that** the carboxylic acid is obtained from rapeseed oil.

4. Use of a thermometer liquid according to any one of the preceding Claims as a filling liquid for a capillary thermometer, **characterised in that** the thermometer liquid consists of a liquid ester of a preferably aliphatic carboxylic acid.

5. Use of a thermometer liquid according to Claim 4 as a filling liquid for a capillary thermometer, **characterised in that** the thermometer liquid consists of an ester with a monohydric alcohol, in particular methanol.

6. Use of a thermometer liquid according to Claim 2 or 3 in conjunction with Claim 5 as a filling liquid for a capillary thermometer, **characterised in that** it consists of fatty acid methyl ester (biodiesel).

7. Use of a thermometer liquid according to any one of the preceding Claims as a filling liquid for a capillary thermometer, **characterised by** the admixture of additives, for example as antifreeze, such as ethylene glycol, to improve resistance to ageing, viscosity, wetting properties and/or colour.

8. Use of a thermometer liquid according to Claim 7 as a filling liquid for a capillary thermometer, **characterised in that** the additives are admixed in a proportion of 0.01 - 5 wt.%, preferably approximately 2.5 wt.%,

9. Use of a thermometer liquid according to any one of the preceding Claims as a filling liquid for a capillary thermometer, **characterised in that** this is produced by pressing plants, in particular rape, in a first method step in order to obtain a vegetable oil, in particular rapeseed oil.

10. Use of a thermometer liquid according to Claim 9 as a filling liquid for a capillary thermometer, **characterised in that** this is produced by esterifying the vegetable oil, and/or converting it to an ester with a monohydric alcohol, in particular with methanol.

## Revendications

1. Utilisation d'un liquide thermométrique à base d'acides carboxyliques, notamment d'acides monocarboxyliques, saturés ou insaturés, de préférence aliphatiques, comme liquide de remplissage pour un thermomètre à capillaire.

2. Utilisation d'un liquide thermométrique selon la revendication 1 comme liquide de remplissage pour un thermomètre à capillaire, **caractérisée en ce que** l'acide carboxylique est d'origine végétale.

3. Utilisation d'un liquide thermométrique selon la revendication 2 comme liquide de remplissage pour un thermomètre à capillaire, **caractérisée en ce que** l'acide carboxylique est tiré d'huile de colza.

4. Utilisation d'un liquide thermométrique selon l'une des revendications précédentes comme liquide de remplissage pour un thermomètre à capillaire, **caractérisée en ce que** le liquide thermométrique consiste en un ester liquide d'un acide carboxylique, de préférence aliphatique.

5. Utilisation d'un liquide thermométrique selon la revendication 4 comme liquide de remplissage pour un thermomètre à capillaire, **caractérisée en ce que** le liquide thermométrique consiste en un ester avec un monoalcool, notamment du méthanol.

6. Utilisation d'un liquide thermométrique selon la revendication 2 ou 3 en combinaison avec la revendication 5, comme liquide de remplissage pour un thermomètre à capillaire, **caractérisée en ce que** celui-ci consiste en de l'ester méthylique d'acide gras (biodiesel).

7. Utilisation d'un liquide thermométrique selon l'une des revendications précédentes comme liquide de remplissage pour un thermomètre à capillaire, **caractérisée par** l'ajout d'additifs, par exemple sous forme d'antigel comme de l'éthylèneglycol, pour l'amélioration de la résistance à l'altération, de la viscosité, des caractéristiques de mouillage et/ou de la couleur.

8. Utilisation d'un liquide thermométrique selon la revendication 7 comme liquide de remplissage pour un thermomètre à capillaire, **caractérisée en ce que** les additifs sont ajoutés dans une proportion de 0,01 à 5 % en poids, de préférence de 2,5 % en poids environ.

9. Utilisation d'un liquide thermométrique selon l'une des revendications précédentes comme liquide de remplissage pour un thermomètre à capillaire, **caractérisée en ce que** celui-ci est produit, dans une première étape opératoire, par pressage de plantes, notamment de colza, permettant d'obtenir une huile végétale, notamment de l'huile de colza.

10. Utilisation d'un liquide thermométrique selon la revendication 9 comme liquide de remplissage pour un thermomètre à capillaire, **caractérisée en ce que** celui-ci est produit par estérification de l'huile végétale et/ou conversion de l'huile végétale en un ester avec un monoalcool, notamment avec du méthanol.
